(19) Europäisches Patentamt
European Patent Office
Office européen des brevets

(11) EP 0 809 938 B1

(12) **EUROPÄISCHE PATENTSCHRIFT**

(45) Veröffentlichungstag und Bekanntmachung des Hinweises auf die Patenterteilung:
**04.07.2001 Patentblatt 2001/27**

(51) Int Cl.$^7$: **A01N 47/36**, A01N 43/78, A01N 43/76, A01N 43/42, A01N 47/16, A01N 47/12, A01N 37/22, A01N 43/40

(21) Anmeldenummer: **97112398.9**

(22) Anmeldetag: **01.10.1990**

(54) **Synergistische herbizide Mittel**

Synergistic herbicides

Herbicides synergistiques

(84) Benannte Vertragsstaaten:
**DE ES IT**

(30) Priorität: **07.10.1989 DE 3933543**

(43) Veröffentlichungstag der Anmeldung:
**03.12.1997 Patentblatt 1997/49**

(62) Dokumentnummer(n) der früheren Anmeldung(en) nach Art. 76 EPÜ:
**90916262.0 / 0 494 988**

(73) Patentinhaber: **Aventis CropScience GmbH**
**65929 Frankfurt am Main (DE)**

(72) Erfinder:
- **Bauer, Klaus**
  **63456 Hanau (DE)**
- **Bieringer, Hermann**
  **65817 Eppstein (DE)**
- **Hacker, Erwin**
  **65239 Hochheim (DE)**

(56) Entgegenhaltungen:
**EP-A- 0 298 901** **US-A- 4 420 325**

- **Patent Abstracts of Japan, vol. 10, no. 144(C-34); & JP-A-615004 (NIPPON TOKUSHU NOYAKU SEIZO K.K.), 10-01-1986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 809 938 B1

Printed by Jouve, 75001 PARIS (FR)

## Beschreibung

Die Erfindung liegt auf dem Gebiet der Pflanzenschutzmittel, die gegen monokotyle und dikotyle Unkräuter eingesetzt werden können.

In den deutschen Patentanmeldungen P 38 16 704.2 (EP-A-0342569), P 38 16 703.4 (EP-A-0342568) und P 39 09 053.1 (EP-A-0388771) werden heterocyclisch substituierte Phenoxysulfonylharnstoffe beschrieben, mit denen ein breites Spektrum mono- und dikotyler Unkräuter bekämpft werden kann. Sie können sowohl als Bodenherbizid als auch übers Blatt eingesetzt werden und zeigen besonders auch hohe Selektivität in monokotylen Kulturpflanzen wie Getreide, Mais, Reis und Sorghum.

Herbizide Mischungen von N-Benzylsulphonylharnstoffen und Mefenacet (B7) wurden in JP-A-59-123924 beschrieben.

Sowohl im Getreide als auch im Mais und Reis existieren jedoch eine Reihe wirtschaftlich sehr wichtiger monokotyler Unkräuter wie z. B. Alopecurus myosuroides, Avena fatua, Echinochloa crus galli oder Setaria viridis, die mit den erwähnten Verbindungen alleine nicht in optimaler Weise zu bekämpfen sind.

Überraschenderweise wurden nun in biologischen Versuchen einige herbizide Wirkstoffe gefunden, die bei gemeinsamer Anwendung mit den obengenannten Verbindungen ausgesprochen synergistische Eigenschaften hinsichtlich der Effektivität gegen Unkräuter haben.

Gegenstand der vorliegenden Erfindung sind herbizide Mittel, gekennzeichnet durch einen synergistisch wirksamen Gehalt an

A) Verbindungen der allgemeinen Formel (I) oder deren Salze

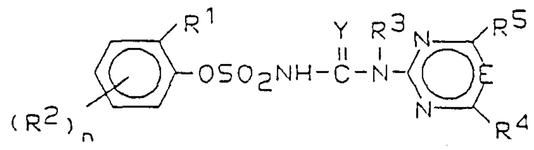

(I)

worin

a$_1$)

R$^1$ Ethoxy, Propoxy oder Isopropoxy und
R$^2$ Halogen, $NO_2$, $CF_3$, CN, $C_1$-$C_4$-Alkyl, $C_1$-$C_4$-Alkoxy, $C_1$-$C_4$-Alkylthio oder ($C_1$-$C_4$-Alkoxy)-carbonyl und
n 0, 1, 2 oder 3 oder

a$_2$)

R$^1$ gegebenenfalls ungesättigtes $C_1$-$C_8$-Alkoxy, das substitutiert ist durch Halogen, gegebenenfalls ungesättigtes $C_1$-$C_6$-Alkoxy, einen Rest der Formel ($C_1$-$C_6$-Alkyl)-S-, ($C_1$-$C_6$-Alkyl)-SO-, ($C_1$-$C_6$-Alkyl)-$SO_2$-, ($C_1$-$C_6$-Alkyl)-O-CO-, $NO_2$, CN oder Phenyl; ferner $C_2$-$C_8$-Alkenyloxy oder -Alkinyloxy und
R$^2$ gesättigtes oder ungesättigtes $C_1$-$C_8$-Alkyl, Phenyl, Phenoxy, $C_1$-$C_4$-Alkoxy, $C_1$-$C_4$-Alkylthio, ($C_1$-$C_4$-Alkoxy)-carbonyl, wobei alle vorstehenden Reste für $R^2$ durch Halogen, $C_1$-$C_4$-Alkoxy oder $C_1$-$C_4$-Alkylthio substituiert sein können, oder Halogen, $NO_2$, $C_1$-$C_4$-Alkylsulfonyl oder -sulfinyl und
n 0, 1, 2 oder 3 oder

a$_3$)

R$^1$ $C_1$-$C_8$-Alkoxy und
R$^2$ $C_2$-$C_8$-Alkenyl oder -Alkinyl, Phenyl oder Phenoxy, wobei die genannten Reste für $R^2$ unsubstituiert oder durch Halogen, $C_1$-$C_4$-Alkoxy oder -Alkylthio substituiert sind, oder $C_1$-$C_4$-Alkylsulfonyl oder -Alkylsulfinyl und
n 1, 2 oder 3 oder

a$_4$)

$R^1$ - jeweils in 2-Stellung am Phenylrest - Halogen, Methoxy, Ethyl oder Propyl,
$R^2$ ($C_1$-$C_4$-Alkoxy)-carbonyl in 6-Stellung im Phenylrest und
n 1

sowie in allen Fällen $a_1$)-$a_4$)

$R^3$ Wasserstoff, gesättigtes oder ungesättigtes $C_1$-$C_8$-Alkyl oder $C_1$-$C_4$-Alkoxy,
$R^4$, $R^5$ unabhängig voneinander Wasserstoff, Halogen, $C_1$-$C_4$-Alkyl, $C_1$-$C_4$-Alkoxy, $C_1$-$C_4$-Alkylthio, wobei die letztgenannten drei Reste unsubstituiert oder durch Halogen, $C_1$-$C_4$-Alkoxy oder $C_1$-$C_4$-Alkylthio substituiert sind,
Y O oder S und
E CH oder N

bedeuten,
in Kombination mit
B) einer oder mehreren Verbindung(en) aus der Gruppe, welche die Verbindungen
B7) 2-(1,3-Benzthiazol-2-yloxy)-N-methyl-acetanilid,

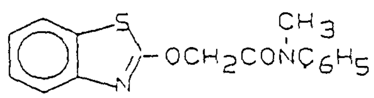

(B7)

und
B8) 2-[4-(6-Chlor-benzoxazol-2-yloxy)-phenoxy]-propionsäure-ethylester,

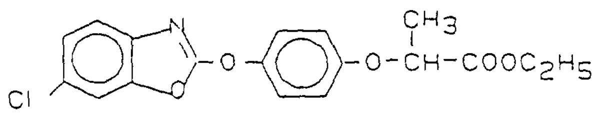

(B8)

enthält.

Die Verbindungen A (Verbindungen der Formel I) sind aus den anfangs genannten deutschen Patentanmeldungen bekannt.

Die Verbindungen B7 und B8 sind in "The Pesticide Manual", British Crop Protection Council, 8th Ed., 1987 beschrieben; B7 ("Mefenacet") S. 526; B8 ("Fenoxaprop-ethyl") S. 379.

Von besonderem Interesse sind erfindungsgemäße herbizide Mittel mit Verbindungen der genannten Formel (I) oder deren Salzen, worin

$a_1$)

$R^1$ Ethoxy, Propoxy oder Isopropoxy und
$R^2$ in Position 6 orientiert ist und die obengenannte Bedeutung hat, und
n 0 oder 1 oder

$a_2$)

$R^1$ gegebenenfalls ungesättigtes $C_1$-$C_4$-Alkoxy, das substituiert ist durch Halogen, $C_1$-$C_4$-Alkoxy, $C_1$-$C_4$-Alkylthio oder -sulfinyl oder -sulfonyl, ($C_1$-$C_4$-Alkoxy)-carbonyl, $NO_2$, CN oder Phenyl; ferner $C_2$-$C_5$-Alkenyloxy oder $C_2$-$C_4$-Alkinyloxy und
$R^2$ $C_1$-$C_4$-Alkyl, $C_2$-$C_5$-Alkenyl, ($C_1$-$C_4$-Alkoxy)-carbonyl, $C_1$-$C_4$-Alkoxy oder $C_1$-$C_4$-Alkylthio, die wie oben angegeben substituiert sein können, oder Halogen und
n 0 oder 1 oder

$a_3$)

$R^1$ Methoxy, Ethyl oder Propyl und
$R^2$ 6-Methoxycarbonyl oder 6-Ethoxycarbonyl und
n 1 sowie

in allen Fällen $a_1$) - $a_3$)

$R^3$ Wasserstoff, $C_1$-$C_4$-Alkyl, insbesondere Wasserstoff oder Methyl,
$R^4$, $R^5$ Halogen, $C_1$-$C_4$-Alkyl, $C_1$-$C_4$-Alkoxy oder $C_1$-$C_4$-Alkylthio, wobei die letztgenannten 3 Reste unsubstituiert oder durch Halogen, $C_1$-$C_4$-Alkoxy oder $C_1$-$C_4$-Alkylthio substituiert sind,
Y O oder S, insbesondere O,
E CH oder N, insbesondere CH,

bedeuten.

Gesättigtes oder ungesättigtes Alkyl und Alkoxy bedeutet entsprechend geradkettiges oder verzweigtes Alkyl bzw. Alkoxy, Halogen bedeutet F, Cl, Br und J, vorzugsweise F und Cl.

Die Verbindungen der Formel (I) können Salze bilden, bei denen der Wasserstoff der $-SO_2$-NH-Gruppe durch ein für die Landwirtschaft geeignetes Kation ersetzt wird. Diese Salze sind im allgemeinen Metall-, insbesondere Alkali-, Erdalkali-, gegebenenfalls alkylierte Ammonium- oder organische Aminsalze.

Bei den genannten Formeln für die Verbindungen A und B wurde die Stereochemie nicht im einzelnen angegeben. Sofern Stereoisomere vorkommen können, sind mit den Formeln auch alle geometrischen Isomeren, Enantiomeren und Diastereomeren sowie deren Gemische umfaßt. Bei der Verbindung B8 ist insbesondere auch D-Fenoxapropethyl umfaßt und bevorzugt.

Bevorzugte herbizide Mittel enthalten als Verbindungen A ein oder mehrere Verbindungen der Formeln A1, A2 und A3, wobei die Formeln folgendes bedeuten:

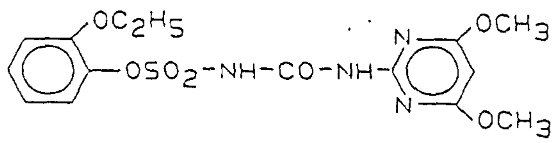

(A1)

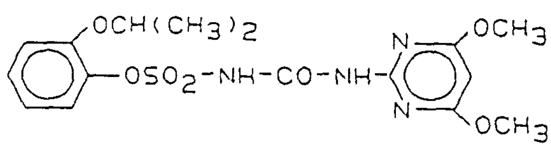

(A2)

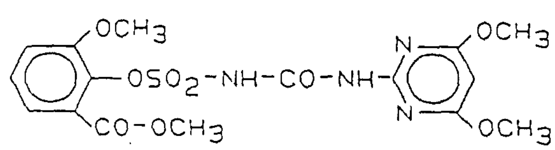

(A3)

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöckchen oder anderen Dauerorganen austreiben, werden durch die Wirkstoffkombinationen gut erfaßt. Dabei ist es gleichgültig, ob die Substanzen im Vorsaat-, Vorauflauf- oder Machauflaufverfahren ausgebracht werden. Im einzelnen seien beispielhaft einige Vertreter der mono- und dikotylen Unkrautflora genannt, die durch die erfindungsgemäßen Mittel kontrolliert werden können, ohne daß durch die Nennung eine Beschränkung auf bestimmte Arten erfolgen soll.

Auf der Seite der monokotylen Unkrautarten werden z. B. Avena, Lolium, Alopecurus, Phalaris, Echinochloa, Digitaria, Setaria etc. sowie Cyperusarten aus der annuellen Gruppe und auf seiten der perennierenden Spezies Agropyron, Cynodon, Imperata sowie Sorghum etc. und auch ausdauernde Cyperusarten gut erfaßt.

Bei dikotylen Unkrautarten erstreckt sich das Wirkungsspektrum auf Galium, Viola, Veronica, Lamium, Stellaria, Amaranthus, Sinapis, Ipomoea, Matricaria, Abutilon, Sida etc. auf der annuellen Seite sowie Convolvulus, Cirsium, Rumex, Artemisia etc. bei den perennierenden Unkräutern.

Unter den spezifischen Kulturbedingungen im Reis vorkommenden Unkräuter wie z. B. Sagittaria, Alisma, Eleocharis, Scirpus, Cyperus etc. werden von den erfindungsgemäßen Wirkstoffkombinationen ebenfalls hervorragend bekämpft.

Unter den spezifischen Kulturbedingungen im Mais und Reis werden wirtschaftlich wichtige monokotyle Unkräuter, wie z. B. Alopecurus myosuroides, Avena fatua, Echinochloa crus galli und Setaria viridis bekämpft.

Werden die erfindungsgemäßen herbiziden Mittel vor dem Keimen auf die Erdoberfläche appliziert, so wird entweder das Auflaufen der Unkrautkeimlinge vollständig verhindert, oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffkombinationen auf die grünen Pflanzenteile im Nachauflaufverfahren tritt ebenfalls sehr rasch nach der Behandlung ein drastischer Wachstumsstop ein, und die Unkrautpflanzen bleiben in dem zum Applikationszeitpunkt vorhandenen Wuchsstadium stehen oder sterben nach einer gewissen Zeit mehr oder weniger schnell ab, so daß auf diese Weise eine für die Kulturpflanzen schädliche Unkrautkonkurrenz sehr früh und nachhaltig durch den Einsatz der neuen erfindungsgemäßen Mittel beseitigt werden kann.

Obgleich die erfindungsgemäßen Mittel eine ausgezeichnete herbizide Aktivität gegenüber mono- und dikotylen Unkräutern aufweisen, werden Kulturpflanzen wirtschaftlich bedeutender Kulturen wie z.B. Weizen, Gerste, Roggen, Reis und Mais nur unwesentlich oder gar nicht geschädigt. Die Mittel eignen sich aus diesen Gründen sehr gut zur selektiven Bekämpfung von unerwünschtem Pflanzenwuchs in landwirtschaftlichen Nutzpflanzungen.

Mit den erfindungsgemäßen Wirkstoffkombinationen wird z. B. eine herbizide Wirkung erreicht, die über das hinausgeht, was als additive Wirkung der Einzelkomponenten zu erwarten gewesen ist. Solche Wirkungssteigerungen erlauben es, die Einsatzmengen der einzelnen Wirkstoffe erheblich zu reduzieren. Es wurden auch Wirkungsvorteile der Art gefunden, daß entweder die Dauerwirkung der Kombinationen verbessert wird oder eine Beschleunigung der Wirkungsgeschwindigkeit zu beobachten ist. Solche Eigenschaften sind deshalb neue, wirtschaftlich fortschrittliche Erfindungen, die dem Anwender erhebliche Vorteile bei der praktischen Unkrautbekämpfung bieten, indem er Unkräuter billiger oder rascher oder dauerhafter bekämpfen kann und dadurch in einem Kulturpflanzenbestand mehr Ertrag erntet.

Ferner wurde gefunden, daß bei einer Reihe der Wirkstoffkombinationen eine Safener- oder Antidotwirkung ausgeprägt vorhanden ist, d. h. daß phytotoxische Nebenwirkungen der verwendeten Wirkstoffe bei Kulturpflanzen, wie z. B. dem Reis, herabgesetzt oder gänzlich vermieden werden.

Die Wirkstoffkombinationen der Erfindung können zusätzlich einen Gehalt an einer oder mehreren Verbindung (en) aus der Gruppe aufweisen, welche die Verbindungen

B1) 3,7-Dichlorchinolin-8-carbonsäure und deren Salze,

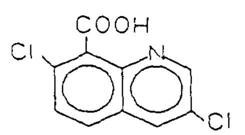

(B1)

B2) N- (Ethylthio-carbonyl)-azepan,

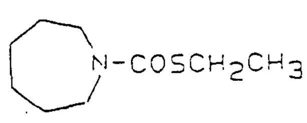

(B2)

B3) N,N-Diethyl-carbaminsäure-4-chlorbenzylthioester,

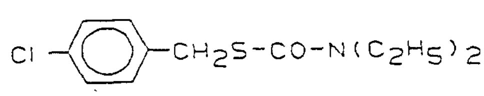

(B3)

B4) N-(Butoxymethyl)-2-chlor-N-(2,6-diethylphenyl)-acetamid,

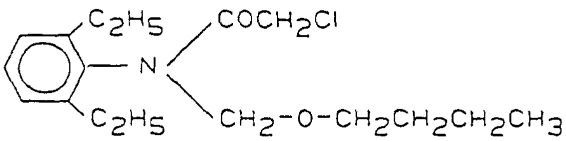

(B4)

B5) N-(2-Propoxyethyl)-2-chlor-N-(2,6-diethylphenyl)-acetamid,

B6) 3,5-Bis(methylthio-carbonyl)-2-difluormethyl-4-(2-methylpropyl)-6-trifluormethyl-pyridin,

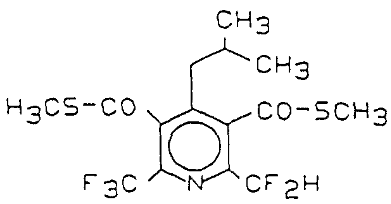

(B6)

B9) N-(2-Phenyl-prop-2-yl-thiocarbonyl)-piperidin,

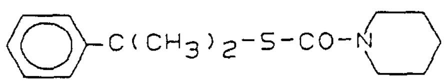

(B9)

und

B10) NTN-901 (Gräserherbizid)

enthält.

Die Verbindung B1 ist aus British Crop Protection Conference - Weeds, 1985, S. 77-83 als BAS 514 H (Quinchlorac) bekannt.

Die Verbindungen B2 - B5 sind in "The Pesticide Manual", British Crop Protection Council, 8th Ed., 1987 beschrieben; siehe B2 ("Molinate") S. 578; B3 ("Thiobencarb") S. 796; B4 ("Butachlor") S. 106; B5 ("Pretilachlor") S. 689;

Verbindung B6 ist als "MON 7200" bekannt und von M. Fujiyama, M. Kasai und S. Yamane in "Proceedings of the 11th Asian-Pacific Weed Science Society Conference 1987, Seiten 455-460" beschrieben.

Verbindung B9 ist als selektives Herbizid in "Short Review of Herbicides 1986", 5th Edition 1985, Hodogaya Chemical Co. Ltd., Japan, Seite 108 als MY-93 Kayamate sowie in "Agricultural Chemicals Book II", Thomson Publications, USA 1989-90 als Dimepiperate oder Yukamate beschrieben. Die Verbindung NTN-901 von Nihon Tokusho Nohyaku Seizo (Japan) wird als selektives Herbizid zur Bekämpfung von Echinochloa in Reis eingesetzt.

Auch bei den genannten Formeln für die Verbindungen B1 - B6 sowie B9 und B10 wurde die Stereochemie nicht im einzelnen angegeben. Sofern Stereoisomere vorkommen, sind mit den Formeln auch alle geometrischen Isomeren, Enantiomeren und Diastereomeren sowie deren Gemische umfaßt.

Die Mischungsverhältnisse A : B können innerhalb weiter Grenzen schwanken und liegen in der Regel zwischen 1 : 0,5 bis 1 : 200. Die Wahl des Mischungsverhältnisses ist z. B. abhängig vom Mischungspartner, Entwicklungsstadium der Unkräuter, Unkrautspektrum und Klimabedingungen.

Vorzugsweise werden Mischungsverhältnisse von 1:1 bis 1:100 angewendet. Die Aufwandmengen des Herbizids A in den Wirkstoffmischungen liegen bevorzugt zwischen 10 und 100 g/ha, die Aufwandmengen von B zwischen 0,02 und 4,0 kg/ha.

Die erfindungsgemäßen Wirkstoffkombinationen können sowohl als Mischformulierungen der beiden Komponenten vorliegen, die dann in üblicher Weise mit Wasser verdünnt zur Anwendung gebracht werden, oder als sogenannte Tankmischungen durch gemeinsame Verdünnung der getrennt formulierten Komponenten mit Wasser hergestellt werden.

Die Verbindungen A und B oder deren Kombinationen können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wäßrige Lösungen (SL), Emulsionen (EW) wie Öl-in Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N. Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H. v. Olphen, "Introduction to Clay Colloid Chemistry", 2nd Ed., J. Wiley & Sons, N.Y., Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N. Y. 1964; Schönfeldt, Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Düngemitteln und/oder Wachstumsregulatoren herstellen, z. B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole oder Fettamine, Alkan- oder Alkylbenzolsulfonate und Dispergiermittel, z. B. ligninsulfonsaures Natrium, 2,2'-dinaphthylmethan-6,6'disulfonsaures Natrium, dibutylnaphthalin-sulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids u.a. variiert die erforderliche Aufwandmenge der Verbindungen der Formel (I).

Folgende Beispiele dienen zur Erläuterung der Erfindung:

A. Formulierungsbeispiele

a) Ein Stäubmittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoff A + B, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoff A + B mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277°C) mischt und in einer Reibkugelmühle auf eine Feinheit von unter 5 Mikron vermahlt.

d) Ein emulgierbares Konzentrat wird erhalten aus 15 Gew.-Teilen Wirkstoff A + B, 75 Gew.-Teilen Cyclohexanon als Lösemittel und 10 Gew.-Teilen oxethyliertes Nonylphenol als Emulgator.

e) Ein in Wasser dispergierbares Granulat wird erhalten indem man

| | | |
|---|---|---|
| 75 | Gewichtsteile | Wirkstoffe A + B, |
| 10 | " | ligninsulfonsaures Calcium, |
| 5 | " | Natriumlaurylsulfat, |
| 3 | " | Polyvinylalkohol und |
| 7 | " | Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | | |
|---|---|---|
| 25 | Gewichtsteile | Wirkstoffe A + B, |
| 5 | " | 2,2'-dinaphthylmethan-6,6'-disulfonsaures Natrium, |
| 2 | " | oleoylmethyltaurinsaures Natrium, |
| 1 | Gewichtsteil | Polyvinylalkohol, |
| 17 | Gewichtsteile | Calciumcarbonat und |
| 50 | " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

Nach den unter a) bis f) beschriebenen Formulierungen werden beispielsweise die in der folgenden Tabelle 1 enthaltenen Wirkstoffkombinationen formuliert:

Tabelle 1

| Wirkstoff A | Wirkstoff B | Verhältnis |
|---|---|---|
| A1 | B7 | 1:2 |
| | | 1:10 |
| | | 1:150 |
| A1 | B8 | 1:2 |
| | | 1:10 |
| | | 1:150 |
| A2 | B7 | 1:2 |
| | | 1:10 |
| | | 1:150 |
| A2 | B8 | 1:2 |
| | | 1:10 |
| | | 1:150 |
| A3 | B7 | 1:2 |
| | | 1:10 |
| | | 1:150 |
| A3 | B8 | 1:2 |
| | | 1:10 |
| | | 1:150 |

Biologische Beispiele

1. Unkrautwirkung im Vorauflauf

Samen bzw. Rhizomstücke von mono- und dikotylen Unkrautpflanzen werden in Plastiktöpfen von 9 cm Durchmesser in sandiger Lehmerde ausgelegt und mit Erde abgedeckt. Im Reisanbau vorkommende Unkräuter werden im mit Wasser gesättigten Boden kultiviert, wobei so viel Wasser in die Töpfe gefüllt wird, daß das Wasser bis zu Bodenoberfläche oder einige Millimeter darüber steht. Die in Form von benetzbaren Pulvern oder Emulsionskonzentraten formulierten erfindungsgemäßen Wirkstoffkombinationen sowie in parallelen Versuchen die entsprechend formulierten Einzelwirkstoffe werden dann als wäßrige Suspensionen bzw. Emulsionen mit einer Wasseraufwandmenge von umgerechnet 600 bis 800 l/ha in unterschiedlichen Dosierungen auf die Oberfläche der Abdeckerde appliziert oder beim Reis ins Bewässerungswasser gegossen.

Nach der Behandlung werden die Töpfe im Gewächshaus aufgestellt und unter guten Wachstumsbedingungen für die Unkräuter gehalten. Die optische Bonitur der Pflanzen- bzw. der Auflaufschäden erfolgte nach dem Auflaufen der Versuchspflanzen nach einer Versuchszeit von 3 bis 4 Wochen im Vergleich zu unbehandelten Kontrollen. Die erfindungsgemäßen herbiziden Mittel weisen eine gute herbizide Vorauflaufwirksamkeit gegen ein breites Spektrum von Ungräsern und Unkräutern auf.

In allen Fällen wurde bei den Kombinationen unterschieden zwischen dem errechneten und dem gefundenen Wirkungsgrad. Der errechnete, theoretisch zu erwartende Wirkungsgrad einer Kombination wird ermittelt nach der Formel von S. R. Colby: Calculation of synergistic and antagonistic responses of herbicide combinations, Weeds 15 (1967) 20-22.

Diese Formel lautet:

$$E = X + Y - \frac{X \cdot Y}{100}$$

wobei

X = % Schädigung durch Herbizid A bei x kg/ha Aufwandmenge;

Y = % Schädigung durch Herbizid B bei y kg/ha Aufwandmenge;

E = die zu erwartende Schädigung durch die Herbidzide A + B bei x + y kg/ha.

Ist die tatsächliche Schädigung größer als die rechnerisch zu erwartende, so ist die Wirkung der Kombination mehr als additiv, d. h. es liegt ein synergistischer Wirkungseffekt vor.

Die erfindungsgemäßen Wirkstoffkombinationen haben eine herbizide Wirkung, die höher ist als sie aufgrund der beobachteten Wirkungen der Einzelkomponenten bei alleiniger Anwendung nach Colby zu erwarten ist. Die Wirkstoffkombinationen sind somit synergistisch (vgl. Tabelle 2)

Tabelle 2

| Vorauflaufanwendung | | | | | |
|---|---|---|---|---|---|
| | | % Herbizide Wirkung bei | | | |
| Herbizide(e) | Dosis | Reis verpflanzt | Reis gesät | ECCG | CYMO |
| A1 | 20 | 15 | 30 | 75 | 99 |
| | 5 | 10 | 10 | 30 | 50 |
| | 1,25 | 0 | 0 | 0 | 0 |
| B8 | 120 | 10 | 75 | 100 | 10 |
| | 30 | 0 | 5 | 30 | 0 |
| | 8 | 0 | 0 | 0 | 0 |

Tabelle 2 (fortgesetzt)

| Vorauflaufanwendung | | | | | |
|---|---|---|---|---|---|
| | | % Herbizide Wirkung bei | | | |
| Herbizide(e) | Dosis | Reis verpflanzt | Reis gesät | ECCG | CYMO |
| A1+B8 | 20+120 | 10 | 65 | 100 (100) | 100 (99) |
| | 5+ 30 | 0 | 5 | 85 (51) | 95 (50) |
| | 1+ 8 | 0 | 0 | 40 (0) | 25 (0) |

Abkürzungen:
ECCG = Echinochloa crus galli;
CYMO = Cyprerus monti = Cyperus serotinus
AS = Aktive Substanz (bezogen auf reinen Wirkstoff)
( ) = erwarteter Wert nach Colby
A1 = 1-(4,6-Dimethoxy-pyrimid-2-yl)-3-[(2-ethoxyphenoxy)sulfonyl]-harnstoff
B8 = Fenoxaprop-ethyl

2. Unkrautwirkung im Nachauflauf

Samen bzw. Rhizomstücke von mono- und dikotylen Unkräutern werden in Plastiktöpfen in sandigem Lehmboden ausgelegt, mit Erde abgedeckt und im Gewächshaus unter guten Wachstumsbedingungen angezogen. Im Reisanbau vorkommende Unkräuter werden in Töpfen angezogen, in denen Wasser bis zu 2 cm über der Bodenoberfläche steht, und während der Versuchsphase kultiviert. Drei Wochen nach der Aussaat werden die Versuchspflanzen im Dreiblattstadium behandelt.

Die als Spritzpulver bzw. als Emulsionskonzentrate formulierten erfindungsgemäßen Wirkstoffkombinationen sowie in parallelen Versuchen die entsprechend formulierten Einzelwirkstoffe werden in verschiedenen Dosierungen mit einer Wasseraufwandmenge von umgerechnet 300 bis 600 l/ha auf die grünen Pflanzenteile gesprüht und nach ca. 3 bis 4 Wochen Standzeit der Versuchspflanzen im Gewächshaus unter optimalen Wachstumsbedingungen die Wirkung der Pärparate optisch im Vergleich zu unbehandelten Kontrollen bonitiert. Bei Unkräutern, die im Reisanbau vorkommen, werden die Wirkstoffe auch direkt ins Bewässerungswasser gegeben (Applikation in Analogie zur sogenannten Granulatanwendung) oder auf Pflanzen und ins Bewässerungswasser gesprüht.
Die erfindungsgemäßen Mittel weisen auch im Nachauflauf eine gute herbizide Wirksamkeit gegen ein breites Spektrum wirtschaftlich wichtiger Ungräser und Unkräuter auf.
Die Wirkungen der erfindungsgemäßen Mittel sind nach der Colby-Analyse (vgl. Biolog. Beispiel 1.) synergistisch.

3. Kulturpflanzenverträglichkeit

In weiteren Versuchen im Gewächshaus werden Samen einer größeren Anzahl von Kulturpflanzen und Unkräutern in sandigem Lehmboden ausgelegt und mit Erde abgedeckt. Reis wird als Wasserreis im wassergesättigten Boden angezogen und kultiviert.

Ein Teil der Töpfe wird sofort wie unter 1. beschrieben behandelt, die übrigen im Gewächshaus aufgestellt, bis die Pflanzen zwei bis drei echte Blätter entwickelt haben und dann mit den erfindungsgemäßen Wirkstoffkombinationen und zum Vergleich nur mit einem Einzelwirkstoff in unterschiedlichen Dosierungen, wie unter 2. beschrieben besprüht. Bei Wasserreis erfolgt die Applikation teilweise auch durch Gießen der Wirkstoffe bzw. deren Formulierung in das Bewässerungswasser.

Vier bis fünf Wochen nach der Applikation und Standzeit im Gewächshaus wird mittels optischer Bonitur festgestellt, daß die erfindungsgemäßen Wirkstoffkombinationen verschiedene Kulturen im Vor- und Nachauflaufverfahren selbst bei hohen Wirkstoffdosierungen ungeschädigt lassen. Sie schonen Gramineen-Kulturen wie z.B. Gerste, Weizen, Roggen, Sorghum-Hirsen und insbesondere Mais und Reis (siehe auch Tabellen 2 und 3, Spalten 3 und 4). Die erfindungsgemäßen Wirkstoffkombinationen weisen somit eine hohe Selektivität bei Anwendung zur Bekämpfung von unerwünschten Pflanzenwuchs in landwirtschaftlichen Kulturen auf.

Im Vergleich zu der alleinigen Anwendung der einzelnen Wirkstoffe zeigt sich besonders auch bei erhöhten Dosierungen, daß die Selektivität der Wirkstoffkombinationen im Vergleich zu den Einzelwirkstoffen bei gleicher Aufwandmenge des jeweils wirksamsten der Herbizide besser ist. Die Wirkstoffkombinationen sind somit geeignet, Herbizidschäden an Kulturpflanzen effektiv reduzieren zu können.

**Patentansprüche**

**Patentansprüche für folgende Vertragsstaaten : DE, IT**

**1.** Herbizide Mittel gekennzeichnet durch einen synergistisch wirksamen Gehalt an

A) Verbindungen der allgemeinen Formel (I) oder deren Salze

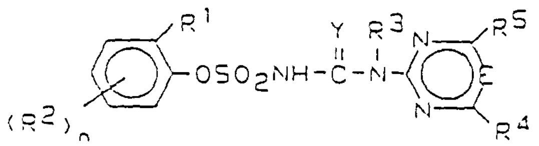

(I)

worin

$a_1$)

$R^1$ Ethoxy, Propoxy oder Isopropoxy und
$R^2$ Halogen, $NO_2$, $CF_3$, CN, $C_1$-$C_4$-Alkyl, $C_1$-$C_4$-Alkoxy, $C_1$-$C_4$-Alkylthio oder ($C_1$-$C_4$-Alkoxy)-carbonyl und
n 0, 1, 2 oder 3 oder

$a_2$)

$R^1$ gegebenenfalls ungesättigtes $C_1$-$C_8$-Alkoxy, das substitutiert ist durch Halogen, gegebenenfalls ungesättigtes $C_1$-$C_6$-Alkoxy, einen Rest der Formel ($C_1$-$C_6$-Alkyl)-S-, ($C_1$-$C_6$-Alkyl)-SO-, ($C_1$-$C_6$-Alkyl)-$SO_2$-, ($C_1$-$C_6$-Alkyl)-O-CO-, $NO_2$, CN oder Phenyl; ferner $C_2$-$C_8$-Alkenyloxy oder -Alkinyloxy und
$R^2$ gesättigtes oder ungesättigtes $C_1$-$C_8$-Alkyl, Pheny Phenoxy, $C_1$-$C_4$-Alkoxy, $C_1$-$C_4$-Alkylthio, ($C_1$-$C_4$-Alkoxy)-carbonyl, wobei alle vorstehenden Reste für $R^2$ durch Halogen, $C_1$-$C_4$-Alkoxy oder $C_1$-$C_4$-Alkylthio substituiert sein können, oder Halogen, $NO_2$, $C_1$-$C_4$-Alkylsulfonyl oder -sulfinyl und
n 0, 1, 2 oder 3 oder

$a_3$)

$R^1$ $C_1$-$C_8$-Alkoxy und
$R^2$ $C_2$-$C_8$-Alkenyl oder -Alkinyl, Phenyl oder Phenoxy wobei die genannten Reste für $R^2$ unsubstituiert oder durch Halogen, $C_1$-$C_4$-Alkoxy oder -Alkylthio substituiert sind, oder $C_1$-$C_4$-Alkylsulfonyl oder -Alkylsulfinyl und
n 1, 2 oder 3 oder

$a_4$)

$R^1$ - jeweils in 2-Stellung am Phenylrest - Halogen, Methoxy, Ethyl oder Propyl,
$R^2$ ($C_1$-$C_4$-Alkoxy)-carbonyl in 6-Stellung im Phenylrest und
n 1

sowie in allen Fällen $a_1$)-$a_4$)

$R^3$ Wasserstoff, gesättigtes oder ungesättigtes $C_1$-$C_8$-Alkyl oder $C_1$-$C_4$-Alkoxy,

$R^4$, $R^5$ unabhängig voneinander Wasserstoff, Halogen, $C_1$-$C_4$-Alkyl, $C_1$-$C_4$-Alkoxy, $C_1$-$C_4$-Alkylthio, wobei die letztgenannten drei Reste unsubstituiert oder durch Halogen, $C_1$-$C_4$-Alkoxy oder $C_1$-$C_4$-Alkylthio substituier sind,

Y O oder S und

E CH oder N

bedeuten,

in Kombination mit

B) einer oder mehreren Verbindung(en) aus der Gruppe, welche die Verbindungen

B7) 2-(1,3-Benzthiazol-2-yloxy)-N-methyl-acetanilid,

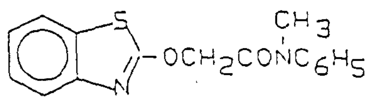

(B7)

und

B8) 2-[4-(6-Chlor-benzoxazol-2-yloxy)-phenoxy]-propionsäure-ethylester,

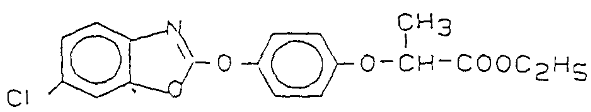

(B8)

enthält.

**2.** Mittel nach Anspruch 1, dadurch gekennzeichnet, daß es Verbindungen der Formel (I) oder deren Salze enthält, worin

$a_1$)

$R^1$ Ethoxy, Propoxy oder Isopropoxy und
$R^2$ in Position 6 orientiert ist und die obengenannte Bedeutung hat, und
n 0 oder 1 oder

$a_2$)

$R^1$ gegebenenfalls ungesättigtes $C_1$-$C_4$-Alkoxy, das substituiert ist durch Halogen, $C_1$-$C_4$-Alkoxy, $C_1$-$C_4$-Alkylthio oder -sulfinyl oder -sulfonyl, ($C_1$-$C_4$-Alkoxy)-carbonyl, $NO_2$, CN oder Phenyl; ferner $C_2$-$C_5$-Alkenyloxy oder $C_2$-$C_4$-Alkinyloxy und
$R^2$ $C_1$-$C_4$-Alkyl, $C_2$-$C_5$-Alkenyl, ($C_1$-$C_4$-Alkoxy)-carbonyl $C_1$-$C_4$-Alkoxy oder $C_1$-$C_4$-Alkylthio, die wie oben angegeben substituiert sein können, oder Halogen und
n 0 oder 1 oder

$a_3$)

$R^1$ Methoxy, Ethyl oder Propyl und
$R^2$ 6-Methoxycarbonyl oder 6-Ethoxycarbonyl und
n 1 sowie

in allen Fällen $a_1$) - $a_3$)

$R^3$ Wasserstoff, $C_1$-$C_4$-Alkyl,

$R^4$, $R^5$ Halogen, $C_1$-$C_4$-Alkyl, $C_1$-$C_4$-Alkoxy oder $C_1$-$C_4$-Alkylthio, wobei die letztgenannten 3 Reste unsubstituiert oder durch Halogen, $C_1$-$C_4$-Alkoxy oder $C_1$-$C_4$-Alkylthio substituiert sind,

Y O oder S,

E CH oder N

bedeuten.

**3.** Mittel nach Anspruch 1 oder 2, dadurch gekennzeichnet daß sie ein oder mehrere Verbindungen der Formeln A1, A2 und A3 oder deren Salze

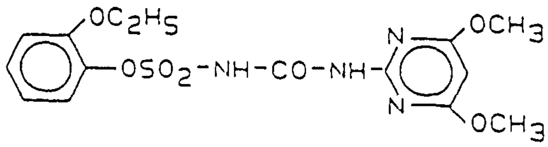

(A1)

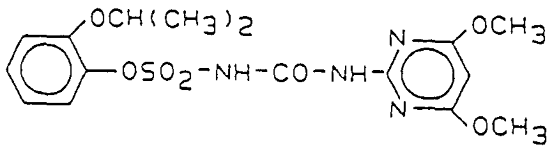

(A2)

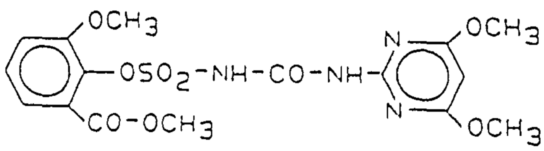

(A3)

enthalten.

**4.** Mittel nach einem oder mehreren der Ansprüche 1 bis 3, gekennzeichnet durch einen zusätzlichen Gehalt an einer oder mehreren Verbindungen aus der Gruppe, welche die Verbindungen

B1) 3,7-Dichlorchinolin-8-carbonsäure und deren Salze,

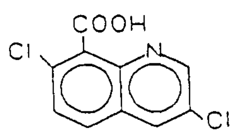

(B1)

B2) N- (Ethylthio-carbonyl)-azepan,

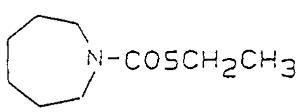

(B2)

B3) N,N-Diethyl-carbaminsäure-4-chlorbenzylthioester,

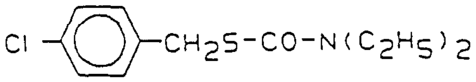

(B3)

B4) N-(Butoxymethyl)-2-chlor-N-(2,6-diethylphenyl)-acetamid,

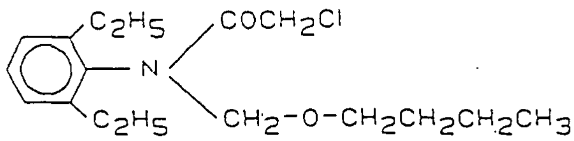

(B4)

B5) N-(2-Propoxyethyl)-2-chlor-N-(2,6-diethylphenyl)-acetamid,

B6) 3,5-Bis(methylthio-carbonyl)-2-difluormethyl-4-(2-methylpropyl)-6-trifluormethyl-pyridin,

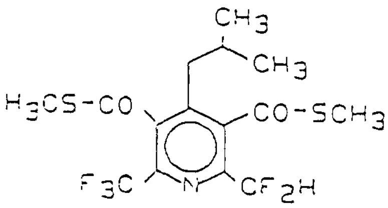

(B6)

B9) N-(2-Phenyl-prop-2-yl-thiocarbonyl)-piperidin,

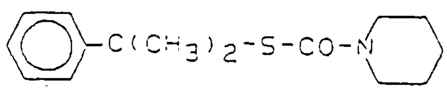

(B9)

und

B10) NTN-901 (Gräserherbizid)

enthält.

**5.** Mittel nach einem oder mehreren der Ansprüche 1 bis 4, dadurch gekennzeichnet, daß sie 0,1 bis 99 Gew.-% der Wirkstoffe A und B7 und/oder 88 neben üblichen Formulierungshilfsmitteln enthalten.

**6.** Mittel nach einem oder mehreren der Ansprüche 1 bis 5, dadurch gekennzeichnet, daß sie die Wirkstoffe A und B7 und/oder B8 im Gewichtsverhältnis 2 : 1 bis 1 : 200 enthalten.

**7.** Verfahren zur Herstellung eines Mittels nach einem oder mehreren der Ansprüche 1 bis 6, dadurch gekennzeichnet, daß man ein oder mehrere Verbindungen A mit ein oder mehreren Verbindungen B7 und/oder B8 analog einer üblichen Pflanzenschutzmittelformulierung aus der Gruppe, enthaltend Spritzpulver, emulsierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Boden- oder Streugranulate, wasserdispergierbare Granulate, ULV-Formulierungen, Mikrokapseln und Wachse, formuliert.

**8.** Verfahren zur Bekämpfung von unerwünschten Pflanzen, dadurch gekennzeichnet, daß man auf diese oder deren Anbauflächen eine herbizid wirksame Menge eines Mittels nach einem oder mehreren der Ansprüche 1 bis 6 appliziert.

9. Verfahren nach Anspruch 8, dadurch gekennzeichnet, daß Unkräuter in Nutzpflanzenkulturen selektiv bekämpft werden.

10. Verfahren nach Anspruch 9, dadurch gekennzeichnet, daß die Nutzpflanzenkultur eine aus der Gruppe Weizen, Gerste, Roggen, Reis und Mais ist.

**Patentansprüche für folgenden Vertragsstaat : ES**

1. Verwendung von herbiziden Mitteln zur Unkrautbekämpfung gekennzeichnet durch einen synergistisch wirksamen Gehalt an

A) Verbindungen der allgemeinen Formel (I) oder deren Salze

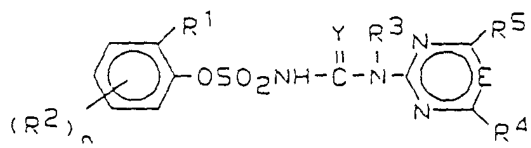

(I)

worin

$a_1$)

$R^1$ Ethoxy, Propoxy oder Isopropoxy und
$R^2$ Halogen, $NO_2$, $CF_3$, CN, $C_1$-$C_4$-Alkyl, $C_1$-$C_4$-Alkoxy, $C_1$-$C_4$-Alkylthio oder ($C_1$-$C_4$-Alkoxy)-carbonyl und
n 0, 1, 2 oder 3 oder

$a_2$)

$R^1$ gegebenenfalls ungesättigtes $C_1$-$C_8$-Alkoxy, das substitutiert ist durch Halogen, gegebenenfalls ungesättigtes $C_1$-$C_6$-Alkoxy, einen Rest der Formel ($C_1$-$C_6$-Alkyl)-S-, ($C_1$-$C_6$-Alkyl)-SO-, ($C_1$-$C_6$-Alkyl)-$SO_2$-, ($C_1$-$C_6$-Alkyl)-O-CO-, $NO_2$, CN oder Phenyl; ferner $C_2$-$C_8$-Alkenyloxy oder -Alkinyloxy und
$R^2$ gesättigtes oder ungesättigtes $C_1$-$C_8$-Alkyl, Phenyl, Phenoxy, $C_1$-$C_4$-Alkoxy, $C_1$-$C_4$-Alkylthio, ($C_1$-$C_4$-Alkoxy)-carbonyl, wobei alle vorstehenden Reste für $R^2$ durch Halogen, $C_1$-$C_4$-Alkoxy oder $C_1$-$C_4$-Alkylthio substituiert sein können, oder Halogen, $NO_2$, $C_1$-$C_4$-Alkylsulfonyl oder -sulfinyl und
n 0, 1, 2 oder 3 oder

$a_3$)

$R^2$ $R^1$ $C_1$-$C_8$-Alkoxy und $C_2$-$C_8$-Alkenyl oder -Alkinyl, Phenyl oder Phenoxy, wobei die genannten Reste für $R^2$ unsubstituiert oder durch Halogen, $C_1$-$C_4$-Alkoxy oder -Alkylthio substituiert sind, oder $C_1$-$C_4$-Alkylsulfonyl oder -Alkylsulfinyl und
n 1, 2 oder 3 oder

a4)

$R^1$ - jeweils in 2-Stellung am Phenylrest - Halogen, Methoxy, Ethyl oder Propyl,
$R^2$ ($C_1$-$C_4$-Alkoxy)-carbonyl in 6-Stellung im Phenylrest und
n 1

sowie in allen Fällen $a_1$)-$a_4$)

$R^3$ Wasserstoff, gesättigtes oder ungesättigtes $C_1$-$C_8$-Alkyl oder $C_1$-$C_4$-Alkoxy,
$R^4$, $R^5$ unabhängig voneinander Wasserstoff, Halogen, $C_1$-$C_4$-Alkyl, $C_1$-$C_4$-Alkoxy, $C_1$-$C_4$-Alkylthio,

wobei die letztgenannten drei Reste unsubstituiert oder durch Halogen, $C_1$-$C_4$-Alkoxy oder $C_1$-$C_4$-Alkylthio substituiert sind,

Y O oder S und

E CH oder N

bedeuten,

in Kombination mit

B) einer oder mehreren Verbindung(en) aus der Gruppe, welche die Verbindungen

B7) 2-(1,3-Benzthiazol-2-yloxy)-N-methyl-acetanilid,

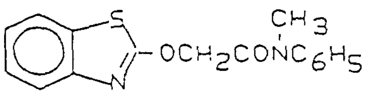 (B7)

und

B8) 2-[4-(6-Chlor-benzoxazol-2-yloxy)-phenoxy]-propionsäure-ethylester,

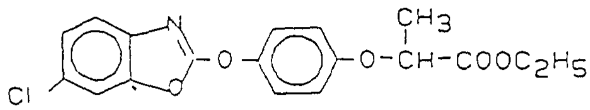 (B8)

enthält.

**2.** Verwendung nach Anspruch 1, dadurch gekennzeichnet, daß die Mittel Verbindungen der Formel (I) oder deren Salze enthalten, worin

$a_1$)

$R^1$ Ethoxy, Propoxy oder Isopropoxy und

$R^2$ in Position 6 orientiert ist und die obengenannte Bedeutung hat, und

n 0 oder 1 oder

a2)

$R^1$ gegebenenfalls ungesättigtes $C_1$-$C_4$-Alkoxy, das substituiert ist durch Halogen, $C_1$-$C_4$-Alkoxy, $C_1$-$C_4$-Alkylthio oder -sulfinyl oder -sulfonyl, ($C_1$-$C_4$-Alkoxy)-carbonyl, $NO_2$, CN oder Phenyl; ferner $C_2$-$C_5$-Alkenyloxy oder $C_2$-$C_4$-Alkinyloxy und

$R^2$ $C_1$-$C_4$-Alkyl, $C_2$-$C_5$-Alkenyl, ($C_1$-$C_4$-Alkoxy)-carbonyl $C_1$-$C_4$-Alkoxy oder $C_1$-$C_4$-Alkylthio, die wie oben angegeben substituiert sein können, oder Halogen und

n 0 oder 1 oder

$a_3$)

$R^1$ Methoxy, Ethyl oder Propyl und

$R^2$ 6-Methoxycarbonyl oder 6-Ethoxycarbonyl und

n 1 sowie

in allen Fällen $a_1$) - $a_3$)

$R^3$ Wasserstoff, $C_1$-$C_4$-Alkyl,

$R^4$, $R^5$ Halogen, $C_1$-$C_4$-Alkyl, $C_1$-$C_4$-Alkoxy oder $C_1$-$C_4$-Alkylthio, wobei die letztgenannten 3 Reste unsubstituiert oder durch Halogen, $C_1$-$C_4$-Alkoxy oder $C_1$-$C_4$-Alkylthio substituiert sind,

Y O oder S,

E CH oder N

bedeuten.

**3.** Verwendung nach Anspruch 1 oder 2, dadurch gekennzeichnet, daß die Mittel ein oder mehrere Verbindungen der Formeln A1, A2 und A3 oder deren Salze

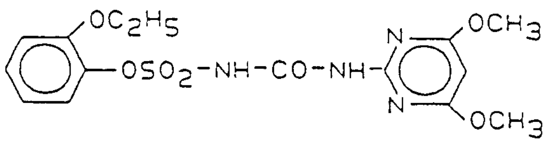

(A1)

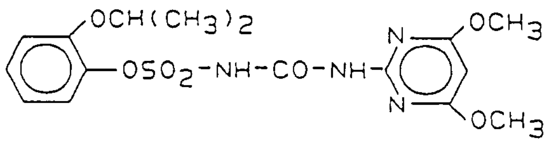

(A2)

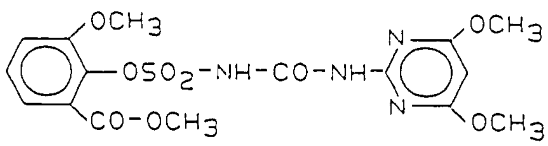

(A3)

enthalten.

**4.** Verwendung nach einem oder mehreren der Ansprüche 1 bis 3, dadurch gekennzeichnet, daß die Mittel einen zusätzlichen Gehalt an einer oder mehreren Verbindung(en) aus der Gruppe, welche die Verbindungen

B1) 3,7-Dichlorchinolin-8-carbonsäure und deren Salze,

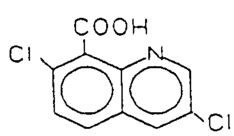

(B1)

B2) N-(Ethylthio-carbonyl)-azepan,

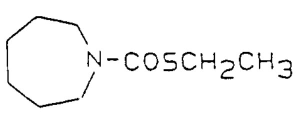

(B2)

B3) N,N-Diethyl-carbaminsäure-4-chlorbenzylthioester,

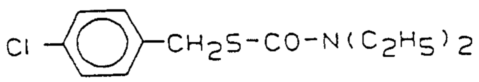 (B3)

B4) N-(Butoxymethyl)-2-chlor-N-(2,6-diethylphenyl)-acetamid,

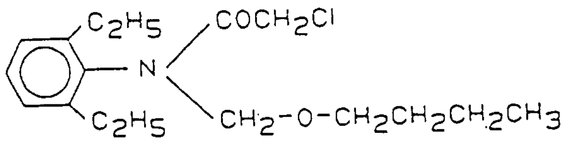 (B4)

B5) N-(2-Propoxyethyl)-2-chlor-N-(2,6-diethylphenyl)-acetamid,

B6) 3,5-Bis(methylthio-carbonyl)-2-difluormethyl-4-(2-methylpropyl)-6-trifluormethyl-pyridin,

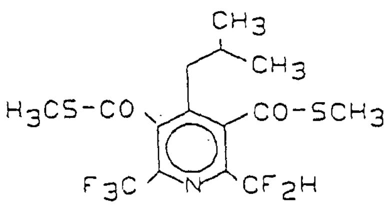 (B6)

B9) N-(2-Phenyl-prop-2-yl-thiocarbonyl)-piperidin,

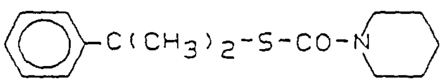 (B9)

und

B10) NTN-901 (Gräserherbizid)

enthält, aufweisen.

5. Verwendung nach einem oder mehreren der Ansprüche 1 bis 4, dadurch gekennzeichnet, daß die Mittel 0,1 bis 99 Gew.-% der Wirkstoffe A und B7 und/oder 38 neben üblichen Formulierungshilfsmitteln enthalten.

6. Verwendung nach einem oder mehreren der Ansprüche 1 bis 5, dadurch gekennzeichnet, daß die Mittel die Wirkstoffe A und B7 und/oder B8 im Gewichtsverhältnis 1 : 0,5 bis 1: 200 enthalten.

7. Verfahren zur Herstellung eines Mittels nach einem oder mehreren der Ansprüche 1 bis 6, dadurch gekennzeichnet, daß man ein oder mehrere Verbindungen A mit ein oder mehreren Verbindungen B7 und/oder B8 analog einer üblichen Pflanzenschutzmittelformulierung aus der Gruppe, enthaltend Spritzpulver, emulsierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Boden- oder Streugranulate, wasserdispergierbare Granulate, ULV-Formulierungen, Mikrokapseln und Wachse, formuliert.

8. Verfahren zur Bekämpfung von unerwünschten Pflanzen, dadurch gekennzeichnet, daß man auf diese oder deren Anbauflächen eine herbizid wirksame Menge eines Mittels nach einem oder mehreren der Ansprüche 1 bis 6 appliziert.

9. Verfahren nach Anspruch 8, dadurch gekennzeichnet, daß Unkräuter in Nutzpflanzenkulturen selektiv bekämpft werden.

10. Verfahren nach Anspruch 9, dadurch gekennzeichnet, daß die Nutzpflanzenkultur eine aus der Gruppe Weizen, Gerste, Roggen, Reis und Mais ist.

## Claims

### Claims for the following Contracting States : DE, IT

1. A herbicidal composition with a synergistically effective content of

A) compounds of the formula (I) or salts thereof

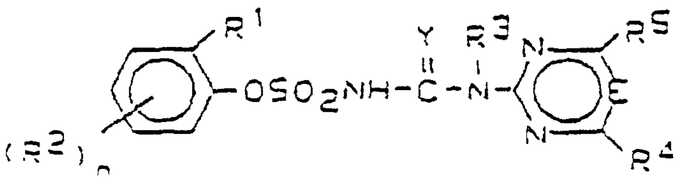

(I)

in which

$a_1$)

$R^1$ is ethoxy, propoxy or isopropoxy and
$R^2$ is halogen, $NO_2$, $CF_3$, CN, $C_1$-$C_4$-alkyl, $C_1$-$C_4$-alkoxy, $C_1$-$C_4$-alkylthio or ($C_1$-$C_4$-alkoxy)-carbonyl and
n is 0, 1, 2 or 3, or

$a_2$)

$R^1$ is optionally unsaturated $C_1$-$C_8$-alkoxy which is substituted by halogen, optionally unsaturated $C_1$-$C_6$-alkoxy, a radical of the formula ($C_1$-$C_6$-alkyl)-S-, ($C_1$-$C_6$-alkyl)-SO-, ($C_1$-$C_6$-alkyl)-$SO_2$-, ($C_1$-$C_6$-alkyl)-O-CO-, $NO_2$, CN or phenyl; furthermore $C_2$-$C_8$-alkenyloxy or -alkynyloxy and
$R^2$ is saturated or unsaturated $C_1$-$C_8$-alkyl, phenyl, phenoxy, $C_1$-$C_4$-alkoxy, $C_1$-$C_4$-alkylthio, ($C_1$-$C_4$-alkoxy)-carbonyl, it being possible for all the above $R^2$ radicals to be substituted by halogen, $C_1$-$C_4$-alkoxy or $C_1$-$C_4$-alkylthio, or is halogen, $NO_2$, $C_1$-$C_4$-alkylsulfonyl or -sulfinyl, and
n is 0, 1, 2 or 3, or

$a_3$)

$R^1$ is $C_1$-$C_8$-alkoxy and
$R^2$ is $C_2$-$C_8$-alkenyl or -alkynyl, phenyl or phenoxy, the abovementioned $R^2$ radicals being unsubstituted or substituted by halogen, $C_1$-$C_4$-alkoxy or -alkylthio, or is $C_1$-$C_4$-alkylsulfonyl or -alkylsulfinyl and
n is 1, 2 or 3, or

$a_4$)

R1 - in each case in the 2-position on the phenyl radical - is halogen, methoxy, ethyl or propyl,
$R^2$ is ($C_1$-$C_4$-alkoxy)-carbonyl in the 6-position on the phenyl radical and
n is 1, and, in all cases $a_1$)-$a_4$),
$R^3$ is hydrogen, saturated or unsaturated $C_1$-$C_8$-alkyl or $C_1$-$C_4$-alkoxy,
$R^4$ and $R^5$ independently of one another are hydrogen, halogen, $C_1$-$C_4$-alkyl, $C_1$-$C_4$-alkoxy, $C_1$-$C_4$-alkylthio, the three last-mentioned radicals being unsubstituted or substituted by halogen,

$C_1$-$C_4$-alkoxy or $C_1$-$C_4$-alkylthio,
Y is O or S and
E is CH or N,

in combination with

B) one or more compound(s) from the group comprising the compounds

B7) 2-(1,3-benzothiazol-2-yloxy)-N-methylacet-anilide,

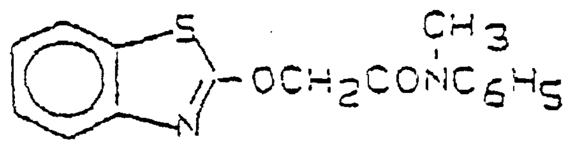

(B7)

and

B8) ethyl 2-[4-(6-chloro-benzoxazol-2-yloxy)phenoxy]propionate,

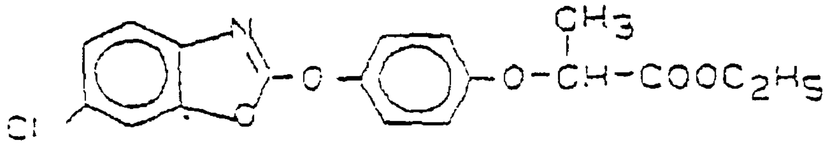

(B8).

**2.** The composition as claimed in claim 1, which contains compounds of the formula (I) or salts thereof, in which

$a_1$)

$R^1$ is ethoxy, propoxy or isopropoxy and
$R^2$ is in the 6-position and has the abovementioned meaning, and
n is 0 or 1, or

$a_2$)

$R^1$ is optionally unsaturated $C_1$-$C_4$-alkoxy which is substituted by halogen, $C_1$-$C_4$-alkoxy, $C_1$-$C_4$-alkylthio or -sulfinyl or -sulfonyl, ($C_1$-$C_4$-alkoxy)-carbonyl, $NO_2$, CN or phenyl; furthermore $C_2$-$C_5$-alkenyloxy or $C_2$-$C_4$-alkynyloxy, and
$R^2$ is $C_1$-$C_4$-alkyl, $C_2$-$C_5$-alkenyl, ($C_1$-$C_4$-alkoxy)-carbonyl, $C_1$-$C_4$-alkoxy or $C_1$-$C_4$-alkylthio, each of which can be substituted as indicated above, or is halogen, and
n is 0 or 1, or

$a_3$)

$R^1$ is methoxy, ethyl or propyl and
$R^2$ is 6-methoxycarbonyl or 6-ethoxycarbonyl and
n is 1, and
in all cases $a_1$) - $a_3$),
$R^3$ is hydrogen, $C_1$-$C_4$-alkyl,
$R^4$ and $R^5$ are halogen, $C_1$-$C_4$-alkyl, $C_1$-$C_4$-alkoxy or $C_1$-$C_4$-alkylthio, the 3 last-mentioned radicals being unsubstituted or substituted by halogen, $C_1$-$C_4$-alkoxy or $C_1$-$C_4$-alkylthio,
Y is O or S and
E is CH or N.

**3.** The composition as claimed in claim 1 or 2, which contains one or more compounds of the formulae Al, A2 and A3 or salts thereof

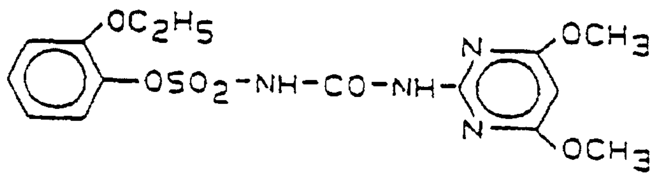

(A1)

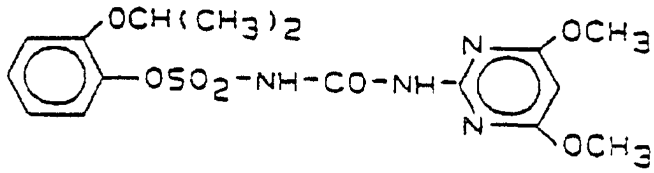

(A2)

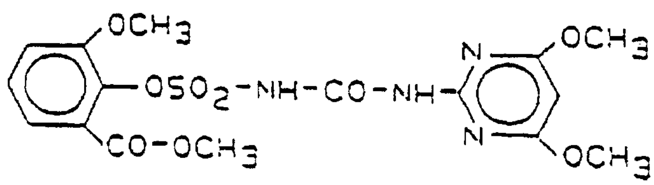

(A3)

**4.** The composition as claimed in one or more of Claims 1 to 3, which additionally comprises one or more compounds from amongst the group comprising the compounds

B1) 3,7-dichloroquinoline-8-carboxylic acid and its salts,

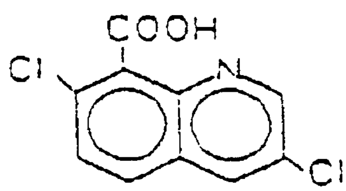

(B1)

B2) N-(ethylthiocarbonyl)azepan,

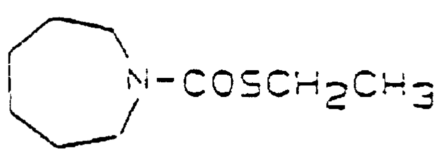

(B2)

B3) N,N-diethylcarbamic acid 4-chlorobenzyl thioester,

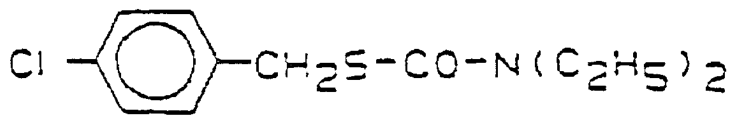

(B3)

B4) N-(butoxymethyl)-2-chloro-N-(2,6-diethyl-phenyl)acetamide,

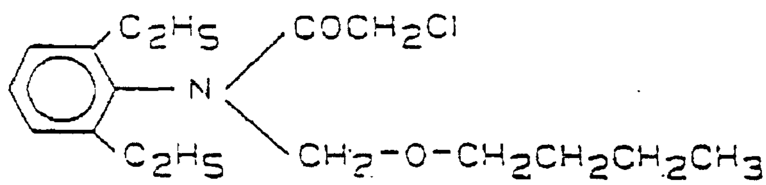

(B4)

B5) N-(2-propoxyethyl)-2-chloro-N-(2,6-diethyl-phenyl)acetamide,

B6) 3,5-bis(methylthiocarbonyl)-2-difluoromethyl-4-(2-methylpropyl)-6-trifluoromethylpyridine,

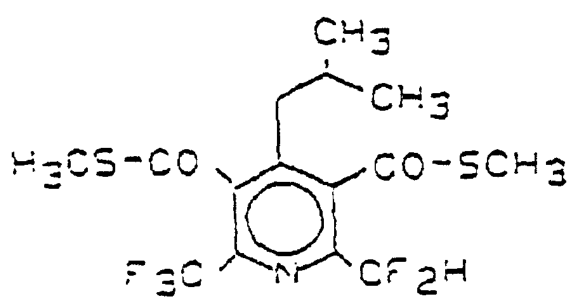

(B6)

B9) N-(2-Phenylprop-2-ylthiocarbonyl)piperidine,

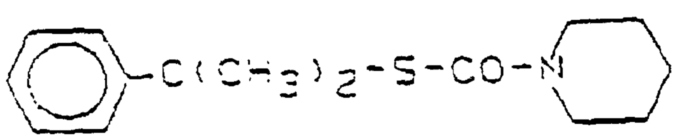

(B9)

and

B10) NTN-901 (grass herbicide).

5. The composition as claimed in one or more of claims 1 to 4, which contains 0.1 to 99% by weight of the active substances A and B7 and/or B8, besides customary formulation auxiliaries.

6. The composition as claimed in one or more of claims 1 to 5, which contains the active substances A and B7 and/or B8 in a ratio by weight of 2 : 1 to 1 : 200.

7. A process for the preparation of a composition as claimed in one or more of claims 1 to 6, which comprises formulating one or more compounds A with one or more compounds B7 and/or B8 analogously to a conventional formulation for crop protection agents from the group comprising wettable powders, emulsifiable concentrates, aqueous solutions, emulsions, sprayable solutions (tank mix), dispersions on an oil or water base, suspoemulsions, dusts, seed-dressing agents, granules for soil application or for broadcasting, water-dispersible granules, ULV formulations, microcapsules and waxes.

**8.** A method of controlling undesirable plants, which comprises applying to these plants or their areas of cultivation a herbicidally effective amount of a composition as claimed in one or more of claims 1 to 6.

**9.** The method as claimed in claim 8, wherein weeds in crops of useful plants are controlled selectively.

**10.** The method as claimed in claim 9, wherein the crop of useful plants is one from amongst the group comprising wheat, barley, rye, corn and rice.

**Claims for the following Contracting State : ES**

**1.** The use of a herbicidal composition for weed control, with a synergistically effective content of

A) compounds of the formula (I) or salts thereof

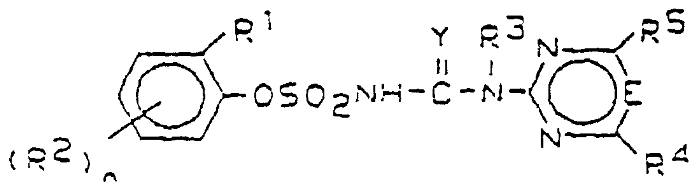

(I)

in which

$a_1$)

$R^1$ is ethoxy, propoxy or isopropoxy and
$R^2$ is halogen, $NO_2$, $CF_3$, CN, $C_1$-$C_4$-alkyl, $C_1$-$C_4$-alkoxy, $C_1$-$C_4$-alkylthio or ($C_1$-$C_4$-alkoxy)-carbonyl and
n is 0, 1, 2 or 3, or

$a_2$)

$R^1$ is optionally unsaturated $C_1$-$C_8$-alkoxy which is substituted by halogen, optionally unsaturated $C_1$-$C_6$-alkoxy, a radical of the formula ($C_1$-$C_6$-alkyl)-S-, ($C_1$-$C_6$-alkyl)-SO-, ($C_1$-$C_6$-alkyl)-$SO_2$-, ($C_1$-$C_6$-alkyl)-O-CO-, $NO_2$, CN or phenyl; furthermore $C_2$-$C_8$-alkenyloxy or -alkynyloxy and
$R^2$ is saturated or unsaturated $C_1$-$C_8$-alkyl, phenyl, phenoxy, $C_1$-$C_4$-alkoxy, $C_1$-$C_4$-alkylthio, ($C_1$-$C_4$-alkoxy)-carbonyl, it being possible for all the above $R^2$ radicals to be substituted by halogen, $C_1$-$C_4$-alkoxy or $C_1$-$C_4$-alkylthio, *or* is halogen, $NO_2$, $C_1$-$C_4$-alkylsulfonyl *or* -sulfinyl, and
n is 0, 1, 2 or 3, or

$a_3$)

$R^1$ is $C_1$-$C_8$-alkoxy and
$R^2$ is $C_2$-$C_8$-alkenyl or -alkynyl, phenyl or phenoxy, the abovementioned $R^2$ radicals being unsubstituted or substituted by halogen, $C_1$-$C_4$-alkoxy or -alkylthio, or is $C_1$-$C_4$-alkylsulfonyl or -alkylsulfinyl and
n is 1, 2 or 3, or $a_4$) $R^1$ - in each case in the 2-position on the phenyl radical - is halogen, methoxy, ethyl or propyl,
$R^2$ is ($C_1$-$C_4$-alkoxy)-carbonyl in the 6-position on the phenyl radical and
n is 1,

and, in all cases $a_1$)-$a_4$),

$R^3$ is hydrogen, saturated or unsaturated $C_1$-$C_8$-alkyl or $C_1$-$C_4$-alkoxy,
$R^4$ and $R^5$ independently of one another are hydrogen, halogen, $C_1$-$C_4$-alkyl, $C_1$-$C_4$-alkoxy, $C_1$-$C_4$-alkylthio, the three last-mentioned radicals being unsubstituted or substituted by halogen, $C_1$-$C_4$-alkoxy or $C_1$-$C_4$-alkylthio,

| | |
|---|---|
| Y | is O or S and |
| E | is CH or N, |

in combination with

B) one or more compound(s) from the group comprising the compounds

B7) 2-(1,3-benzothiazol-2-yloxy)-N-methylacetanilide,

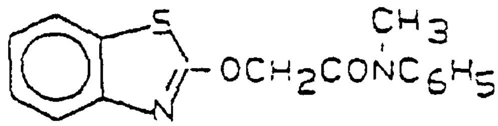

(B7)

and

B8) ethyl 2-[4-(6-chlorobenzoxazol-2-yloxy)phenoxy]-propionate

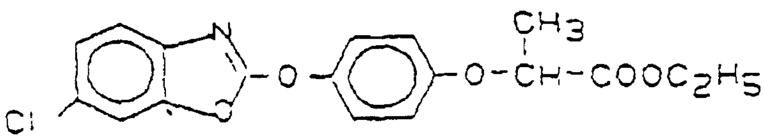

(B8) .

**2.** The use as claimed in claim 1, wherein the composition contains compounds of the formula (I) or salts thereof, in which

$a_1$)

$R^1$ is ethoxy, propoxy or isopropoxy and
$R^2$ is in the 6-position and has the abovementioned meaning, and
n is 0 or 1, or

$a_2$)

$R^1$ is optionally unsaturated $C_1$-$C_4$-alkoxy which is substituted by halogen, $C_1$-$C_4$-alkoxy, $C_1$-$C_4$-alkylthio or -sulfinyl or -sulfonyl, ($C_1$-$C_4$-alkoxy)-carbonyl, $NO_2$, CN or phenyl; furthermore $C_2$-$C_5$-alkenyloxy or $C_2$-$C_4$-alkynyloxy, and
$R^2$ is $C_1$-$C_4$-alkyl, $C_2$-$C_5$-alkenyl, ($C_1$-$C_4$-alkoxy)-carbonyl, $C_1$-$C_4$-alkoxy or $C_1$-$C_4$-alkylthio, each of which can be substituted as indicated above, or is halogen, and
n is 0 or 1, or

$a_3$)

| | |
|---|---|
| $R^1$ | is methoxy, ethyl or propyl and |
| $R^2$ | is 6-methoxycarbonyl or 6-ethoxycarbonyl and |
| n | is 1, and in all cases $a_1$) - $a_3$), |
| $R^3$ | is hydrogen, $C_1$-$C_4$-alkyl, |
| $R^4$ and $R^5$ | are halogen, $C_1$-$C_4$-alkyl, $C_1$-$C_4$-alkoxy or $C_1$-$C_4$-alkylthio, the 3 last-mentioned radicals being unsubstituted or substituted by halogen, $C_1$-$C_4$-alkoxy or $C_1$-$C_4$-alkylthio, |
| Y | is O or S and |
| E | is CH or N. |

**3.** The use as claimed in claim 1 or 2, wherein the composition contains one or more compounds of the formulae A1,

A2 and A3 or salts thereof

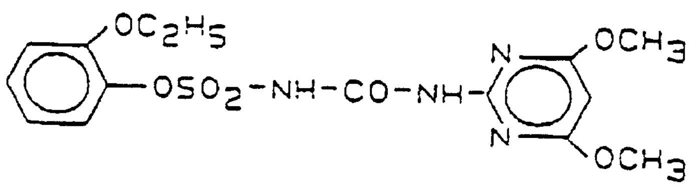

(A1)

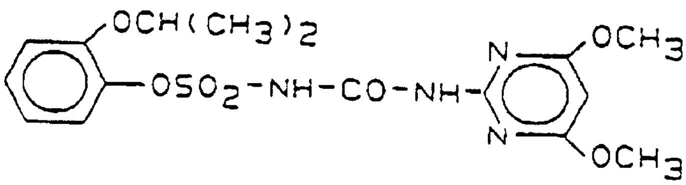

(A2)

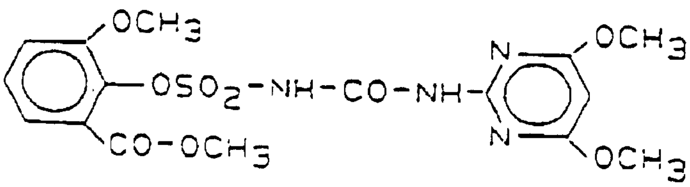

(A3)

**4.** The use as claimed in one or more of Claims 1 to 3, wherein the composition additionally comprises one or more compounds from amongst the group comprising the compound(s)

B1) 3,7-dichloroquinoline-8-carboxylic acid and its salts,

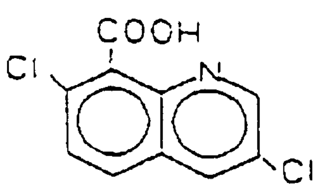

(B1)

B2) N-(ethylthiocarbonyl)azepan,

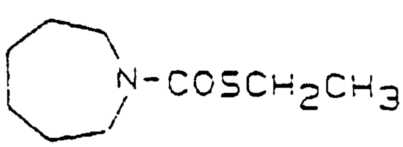

(B2)

B3) N,N-diethylcarbamic acid 4-chlorobenzyl thioester,

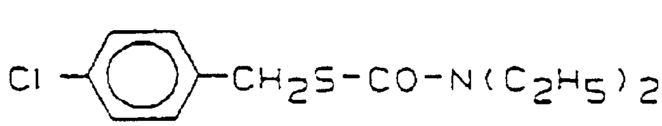

(B3)

B4) N-(butoxymethyl)-2-chloro-N-(2,6-diethyl-phenyl)acetamide,

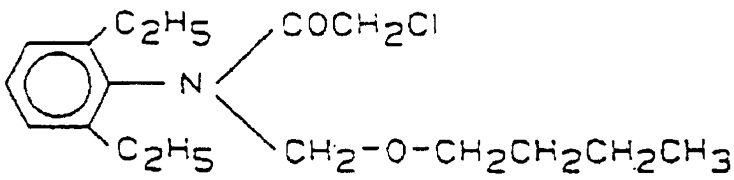

(B4)

B5) N-(2-propoxyethyl)-2-chloro-N-(2,6-diethyl-phenyl)acetamide,
B6) 3,5-bis(methylthiocarbonyl)-2-difluoromethyl-4-(2-methylpropyl)-6-trifluoromethylpyridine,

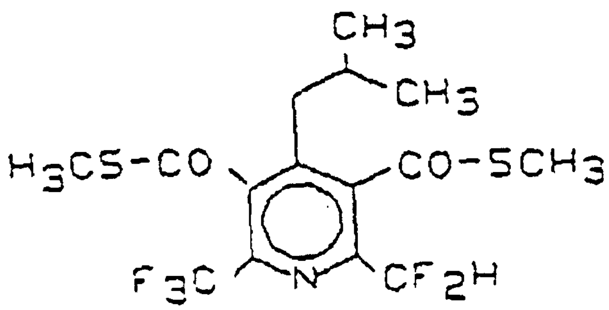

(B6)

B9) N-(2-Phenylprop-2-ylthiocarbonyl)piperidine,

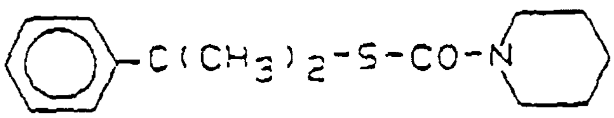

(B9)

and
B10) NTN-901 (grass herbicide).

**5.** The use as claimed in one or more of claims 1 to 4, wherein the composition contains 0.1 to 99% by weight of the active substances A and B7 and/or B8, besides customary formulation auxiliaries.

**6.** The use as claimed in one or more of claims 1 to 5, wherein the composition contains the active substances A and B7 and/or B8 in a ratio by weight of 1 : 0.5 to 1 : 200.

**7.** A process for the preparation of a composition as claimed in one or more of claims 1 to 6, which comprises formulating one or more compounds A with one or more compounds B7 and/or B8 analogously to a conventional formulation for crop protection agents from the group comprising wettable powders, emulsifiable concentrates, aqueous solutions, emulsions, sprayable solutions (tank mix), dispersions on an oil or water base, suspoemulsions, dusts, seed-dressing agents, granules for soil application or for broadcasting, water-dispersible granules, ULV formulations, microcapsules and waxes.

**8.** A method of controlling undesirable plants, which comprises applying to these plants or their areas of cultivation a herbicidally effective amount of a composition as claimed in one or more of claims 1 to 6.

**9.** The method as claimed in claim 8, wherein weeds in crops of useful plants are controlled selectively.

**10.** The method as claimed in claim 9, wherein the crop of useful plants is one from amongst the group comprising wheat, barley, rye, corn and rice.

## Revendications

### Revendications pour les Etats contractants suivants : DE, IT

**1.** Agents herbicides caractérisés par une teneur efficace par synergie en

A) composés de formule générale (I) ou leurs sels où

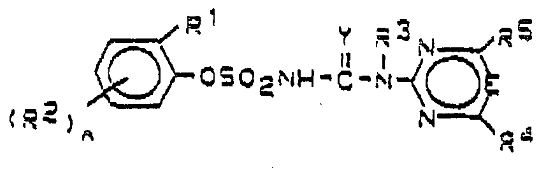

(1)

$a_1$)

$R^1$ représente des groupes éthoxy, propoxy ou isopropoxy et
$R^2$ représente des atomes d'halogène, des groupes $NO_2$, $CF_3$, CN, alkyle en $C_1$-$C_4$, alkoxy en $C_1$-$C_4$, (alkyl en $C_1$-$C_4$)thio ou (alkoxy en $C_1$-$C_4$)-carbonyle et
n vaut 0, 1, 2 ou 3 ou

$a_2$)

$R^1$ représente un groupe alkoxy en $C_1$-$C_8$ éventuellement insaturé qui est substitué par des atomes d'halogène, un groupe alkoxy en $C_1$-$C_6$ éventuellement insaturé, un reste de formule (alkyl en $C_1$-$C_6$)-S-, (alkyl en $C_1$-$C_6$)-SO-, (alkyl en $C_1$-$C_6$)-$SO_2$-, (alkyl en $C_1$-$C_6$)-O-CO-, $NO_2$, CN ou phényle ; de plus un groupe alcényloxy ou alcynyloxy en $C_2$-$C_8$ et
$R^2$ représente un groupe alkyle en $C_1$-$C_8$ saturé ou insaturé, phényle, phénoxy, alkoxy en $C_1$-$C_4$, (alkyl en $C_1$-$C_4$)thio, (alkoxy en $C_1$-$C_4$)-carbonyle, tous les restes précités pour $R^2$ pouvant être substitués par des substituants halogène, alkoxy en $C_1$-$C_4$ ou (alkyl en $C_1$-$C_4$)thio, ou représente un atome d'halogène, des groupes $NO_2$, (alkyl en $C_1$-$C_4$)-sulfonyle ou -sulfinyle et
n vaut 0, 1, 2 ou 3 ou

$a_3$)

$R^1$ représente un groupe alkoxy en $C_1$-$C_8$ et
$R^2$ représente des groupes alcényle ou alcynyle en $C_2$-$C_8$, phényle ou phénoxy, les restes précités pour $R^2$ étant non substituées ou substitués par des substituants halogène, alkoxy ou alkylthio en $C_1$-$C_4$, ou représente des atomes d'halogène, des groupes (alkyl en $C_1$-$C_4$)-sulfonyle ou -sulfinyle et
n vaut 1, 2 ou 3 ou

$a_4$)

$R^1$ représente - à chaque fois en position 2 sur le reste phényle - un atome d'halogène, des groupes méthoxy, éthyle ou propyle,
$R^2$ représente un groupe (alkoxy en $C_1$-$C_4$)-carbonyle en position 6 sur le reste phényle et
n vaut 1

ainsi que dans tous les cas de $a_1$) à $a_4$)

$R^3$ représente un atome d'hydrogène, un groupe alkoxy en $C_1$-$C_4$ ou alkyle en $C_1$-$C_8$ saturé ou insaturé,
$R^4$, $R^5$ représentent, indépendamment l'un de l'autre, un atome d'hydrogène, un atome d'halogène, des groupes alkyle en $C_1$-$C_4$, alkoxy en $C_1$-$C_4$, (alkyl en $C_1$-$C_4$)thio, les trois derniers restes cités étant non substitués ou substitués par des substituants halogène, alkoxy en $C_1$-$C_4$ ou (alkyl en $C_1$-$C_4$) thio,

Y représente un atome de O ou S et
E représente des groupes CH ou N,

en combinaison avec
B) un ou plusieurs composé(s) pris dans le groupe comportant des composés
B7) 2-(1,3-benzothiazol-2-yloxy)-N-méthyl-acétanilide,

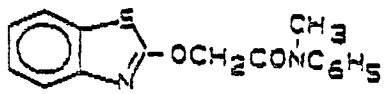
(B7)

et
B8) 2-[4-(6-chloro-benzoxazol-2-yloxy)-phénoxy]-propionate d'éthyle

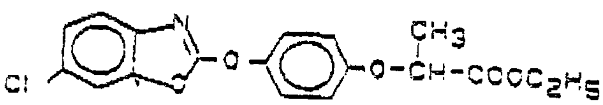
(B8).

**2.** Agents selon la revendication 1, caractérisé en ce qu'ils contiennent des composés de formule (I) ou leurs sels, où

$a_1$)

$R^1$ représente des groupes éthoxy, propoxy ou isopropoxy et
$R^2$ est orienté en position 6 et possède la signification donnée ci-dessus, et
n vaut 0 ou 1 ou

$a_2$)

$R^1$ représente un groupe alkoxy en $C_1$-$C_4$, éventuellement insaturé, qui est substitué par des substituants halogène, alkoxy en $C_1$-$C_4$ (alkyl en $C_1$-$C_4$)-thio ou -sulfinyle ou-sulfonyle, (alkoxy en $C_1$-$C_4$) carbonyle, $NO_2$, CN ou phényle ; de plus alcényloxy en $C_2$-$C_5$, ou alcynyloxy en $C_2$-$C_4$ et
$R^2$ représente un groupe alkyle en $C_1$-$C_4$, alcényle en $C_2$-$C_5$, (alkoxy en $C_1$-$C_4$)-carbonyle, alkoxy en $C_1$-$C_4$ ou (alkyl en $C_1$-$C_4$)-thio, qui peuvent être substitués comme indiqué ci-dessus, ou un atome d'halogène et
n vaut 0 ou 1 ou

$a_3$)

$R^1$ représente des groupes méthoxy, éthyle ou propyle et
$R^2$ représente des groupes 6-méthoxycarbonyle ou 6-éthoxycarbonyle et
n vaut 1,

ainsi que dans tous les cas de $a_1$) à $a_3$)

$R^3$ représente un atome d'hydrogène, un groupe alkyle en $C_1$-$C_4$,
$R^4$, $R^5$ représentent un atome d'halogène, des groupes alkyle en $C_1$-$C_4$, alkoxy en $C_1$-$C_4$ ou (alkyl en $C_1$-$C_4$)thio, les trois derniers restes cités étant non substitués ou substitués par des substituants halogène, alkoxy en $C_1$-$C_4$ ou (alkyl en $C_1$-$C_4$)thio,
Y représente un atome de O ou S et
E représente des groupes CH ou N.

**3.** Agents selon la revendication 1 ou 2, caractérisés en ce qu'ils contiennent un ou plusieurs composés de formules A1, A2 ou A3 ou leurs sels

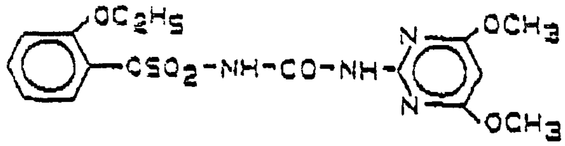

(A1)

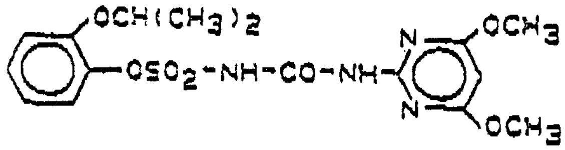

(A2)

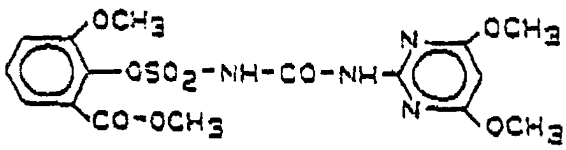

(A3).

**4.** Agents selon une ou plusieurs des revendications 1 à 3, caractérisés par une teneur supplémentaire en un ou plusieurs composés pris dans le groupe contenant les composés

B1) acide 3,7-dichloroquinoléine-8-carboxylique et ses sels

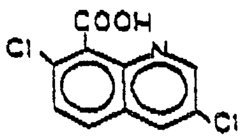

(B1)

B2) N-(éthylthio-carbonyl)-azépane

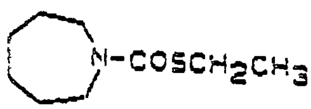

(B2)

B3) ester 4-chlorobenzylthioique de l'acide N,N-diéthylcarbamique

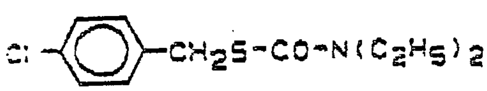

(B3)

B4) N-(butoxyméthyl)-2-chloro-N-(2,6-diéthylphényl)-acétamide

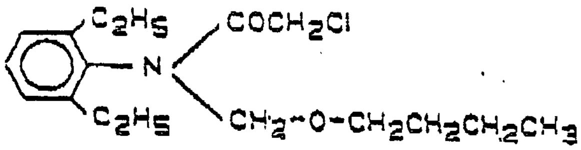

(B4)

B5) N-(2-propoxyéthyl)-2-chloro-N-(2,6-diéthylphényl)-acétamide,
B6) 3,5-bis(méthylthio-carbonyl)-2-difluorométhyl-4-(2-méthylpropyl)-6-trifluorométhyl-pyridine,

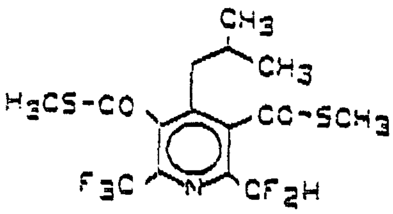

(B6)

B9) N-(2-phényl-prop-2-yl-thiocarbonyl)pipéridine et

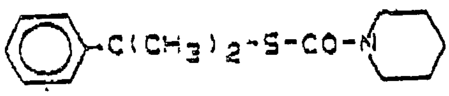

(B9)

B10) NTN-901 (herbicide d'herbe).

5. Agents selon une ou plusieurs des revendications 1 à 4, caractérisés en ce qu'ils contiennent de 0,1 à 99 % en masse des substances actifs A et B7 et/ou B8 au côté des adjuvants de formulation usuels.

6. Agents selon une ou plusieurs des revendications 1 à 5, caractérisés en ce qu'ils contiennent les substances actives A et B7 et/ou B8 dans un rapport pondéral de 2:1 à 1:200.

7. Procédé de préparation d'un agent selon une ou plusieurs des revendications 1 à 6, caractérisé en ce qu'on réalise une formulation d'un ou plusieurs composés A avec un ou plusieurs composés B7 et/ou B8 de façon analogue à une formulation courante d'agents phytoprotecteurs du groupe contenant des poudres pour poudrage, des concentrés émulsionnables, des solutions aqueuses, des émulsions, des solutions pulvérisables (tank-mix), des dispersions à base d'huile ou d'eau, des suspoémulsions, des agents pour poudrage, des stérilisants, des granulés à appliquer au sol ou par épandage, des granulés dispersables dans l'eau, des formulations ULV, des microcapsules et des cires.

8. Procédé pour la lutte contre des plantes indésirables caractérisé en ce qu'on applique sur celles-ci ou sur leur surface à cultiver une quantité efficace herbicide d'un agent selon une ou plusieurs des revendications 1 à 6.

9. Procédé selon la revendication 8, caractérisé en ce qu'il lutte sélectivement contre les plantes nuisibles dans la culture des plantes utiles.

10. Procédé selon la revendication 9, caractérisé en ce que la culture des plantes utiles est une culture appartement au groupe comportant le blé, l'orge, le seigle, le riz et le maïs.

**Revendications pour les Etats contractants suivants : ES**

1. Utilisation d'agents herbicides pour la lutte contre des plantes nuisibles, caractériséé par une teneur efficace par synergie en

A) composés de formule générale (I) ou leurs sels où

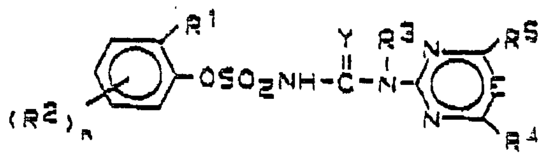

(1)

$a_1$)

$R^1$ représente des groupes éthoxy, propoxy ou isopropoxy et
$R^2$ représente des atomes d'halogène, des groupes $NO_2$, $CF_3$, CN, alkyle en $C_1$-$C_4$, alkoxy en $C_1$-$C_4$, (alkyl en $C_1$-$C_4$)thio ou (alkoxy en $C_1$-$C_4$) -carbonyle et
n vaut 0, 1, 2 ou 3 ou

$a_2$)

$R^1$ représente un groupe alkoxy en $C_1$-$C_8$, éventuellement insaturé, qui est substitué par des substituants halogène, alkoxy en $C_1$-$C_6$ éventuellement insaturé, un reste de formule (alkyl en $C_1$-$C_6$)-S-, (alkyl en $C_1$-$C_6$)-SO-, (alkyl en $C_1$-$C_6$)-$SO_2$-, (alkyl en $C_1$-$C_6$)-O-CO-, $NO_2$, CN ou phényle ; de plus un groupe alcynyloxy ou alcényloxy en $C_2$-$C_8$ et
$R^2$ représente un groupe alkyle en $C_1$-$C_8$ saturé ou insaturé, phényle, phénoxy, alkoxy en $C_1$-$C_4$, (alkyl en $C_1$-$C_4$) thio, (alkoxy en $C_1$-$C_4$)-carbonyle, tous les restes précités pour $R^2$ pouvant être substitués par des substituants halogène, alkoxy en $C_1$-$C_4$ ou (alkyl en $C_1$-$C_4$)thio, ou représente halogène, $NO_2$, (alkyl en $C_1$-$C_4$)-sulfonyle ou -sulfinyle et
n vaut 0, 1, 2 ou 3 ou

$a_3$)

$R^1$ représente un groupe alkoxy en $C_1$-$C_8$ et
$R^2$ représente des groupes alcényle ou alcynyle en $C_2$-$C_8$, phényle ou phénoxy, les restes précités pour $R^2$ étant non substituées ou substitués par des substituants halogène, alkoxy en $C_1$-$C_4$, ou (alkyl en $C_1$-$C_4$)thio ou (alkyl en $C_1$-$C_4$)-sulfonyle ou -sulfinyle et
n vaut 1, 2 ou 3 ou

$a_4$)

$R^1$ représente - à chaque fois en position 2 sur le reste phényle - un atome d'halogène, des groupes méthoxy, éthyle ou propyle,
$R^2$ représente un groupe (alkoxy en $C_1$-$C_4$)-carbonyle en position 6 sur le reste phényle et
n vaut 1

ainsi que dans tous les cas de $a_1$) à $a_4$)

$R^3$ représente un atome d'hydrogène, un groupe alkoxy en $C_1$-$C_4$ ou alkyle en $C_1$-$C_8$ saturé ou insaturé,
$R^4$, $R^5$ représentent, indépendamment l'un de l'autre, un atome d'hydrogène, un atome d'halogène, des groupes alkyle en $C_1$-$C_4$, alkoxy en $C_1$-$C_4$, (alkyl en $C_1$-$C_4$)thio, les trois derniers restes cités étant non substitués ou substitués par des substituants halogène, alkoxy en $C_1$-$C_4$ ou (alkyl en $C_1$-$C_4$)thio,
Y représente un atome de O ou S et
E représente des groupes CH ou N,

en combinaison avec

B) un ou plusieurs composé(s) pris dans le groupe comportant des composés

B7) 2-(1,3-benzothiazol-2-yloxy)-N-méthyl-acétanilide,

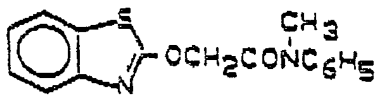 (B7)

et

B8) 2-[4-(6-chloro-benzoxazol-2-yloxy)-phénoxy]-propionate d'éthyle

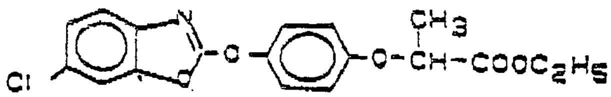 (B8).

**2.** Utilisation selon la revendication 1, caractérisée en ce que les agents contiennent des composés de formule (I) ou leurs sels, où

a$_1$)

$R^1$ représente des groupes éthoxy, propoxy ou isopropoxy et
$R^2$ est orienté en position 6 et possède la signification donnée ci-dessus, et
n vaut 0 ou 1 ou

a$_2$)

$R^1$ représente un groupe alkoxy en $C_1$-$C_4$, éventuellement insaturé, qui est substitué par des substituants halogène, alkoxy en $C_1$-$C_4$ (alkyl en $C_1$-$C_4$)-thio ou sulfinyle ou-sulfonyle, (alkoxy en $C_1$-$C_4$)carbonyle, $NO_2$, CN ou phényle ; de plus alcényloxy en $C_2$-$C_5$ ou alcynyloxy en $C_2$-$C_4$ et
$R^2$ représente des groupes alkyle en $C_1$-$C_4$, alcényle en $C_2$-$C_5$, (alkoxy en $C_1$-$C_4$)-carbonyle, alkoxy en $C_1$-$C_4$ ou (alkyl en $C_1$-$C_4$)-thio, qui peuvent être substitués comme indiqué ci-dessus, ou un atome d'halogène et
n vaut 0 ou 1 ou

a$_3$)

$R^1$ représente des groupes méthoxy, éthyle ou propyle et
$R^2$ représente des groupes 6-méthoxycarbonyle ou 6-éthoxycarbonyle et
n vaut 1,

ainsi que dans tous les cas de a$_1$) à a$_3$)

$R^3$ représente un atome d'hydrogène, un groupe alkyle en $C_1$-$C_4$,
$R^4$, $R^5$ représentent des atomes d'halogène, des groupes alkyle en $C_1$-$C_4$, alkoxy en $C_1$-$C_4$ ou (alkyl en $C_1$-$C_4$)thio, les trois derniers restes cités étant non substitués ou substitués par des substituants halogène, alkoxy en $C_1$-$C_4$ ou (alkyl en $C_1$-$C_4$)thio,
Y représente un atome de O ou S et
E représente des groupes CH ou N.

**3.** Utilisation selon la revendication 1 ou 2, caractérisée en ce que les agents contiennent un ou plusieurs composés de formules A1, A2 ou A3 ou leurs sels

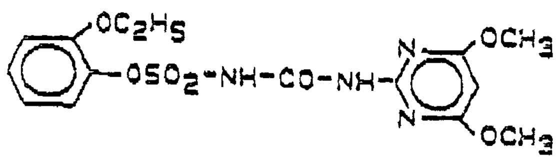

(A1)

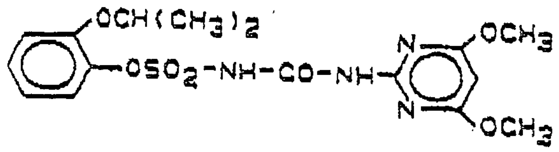

(A2)

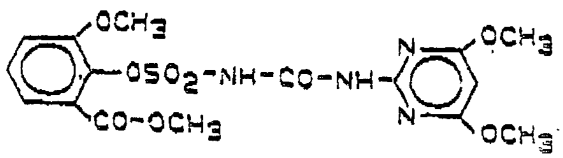

(A3).

**4.** Utilisation selon une ou plusieurs des revendications 1 à 3, caractérisée en ce que les agents contiennent de plus un ou plusieurs composés pris dans le groupe des composés

B1) acide 3,7-dichloroquinoléine-8-carboxylique et ses sels

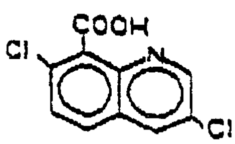

(B1)

B2) N-(éthylthio-carbonyl)-azépane

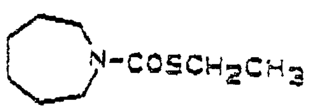

(B2)

B3) ester 4-chlorobenzylthioique de l'acide N,N-diéthylcarbamique

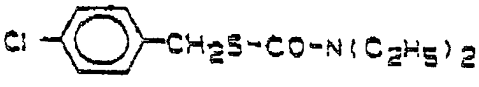

(B3)

B4) N-(butoxyméthyl)-2-chloro-N-(2,6-diéthylphényl)-acétamide

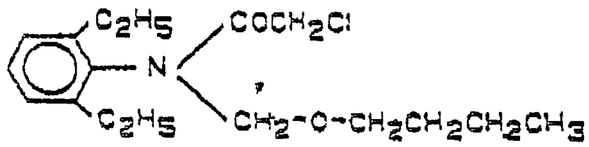

(B4)

B5) N-(2-propoxyéthyl)-2-chloro-N-(2,6-diéthylphényl)-acétamide,
B6) 3,5-bis(méthylthio-carbonyl)-2-difluorométhyl-4-(2-méthylpropyl)-6-trifluorométhyl-pyridine,

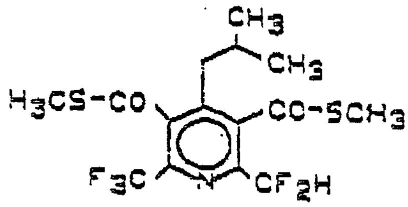

(B6)

B9) N-(2-phényl-prop-2-yl-thiocarbonyl)pipéridine

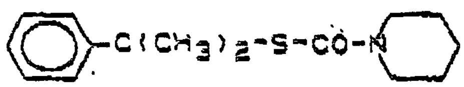

(B9)

et
B10) NTN-901 (herbicide d'herbe).

5. Utilisation selon une ou plusieurs des revendications 1 à 4, caractérisée en ce que les agents contiennent de 0,1 à 99 % en masse des substances actifs A et B7 et/ou B8 au côté des adjuvants de formulation usuels.

6. Utilisation selon une ou plusieurs des revendications 1 à 5, caractérisée en ce que les agents contiennent les substances actives A et B7 et/ou B8 dans un rapport pondéral de 1:0,5 à 1:200.

7. Procédé pour la préparation d'un agent selon une ou plusieurs des revendications 1 à 6, caractérisé en ce qu'on réalise une formulation d'un ou plusieurs composés A avec un ou plusieurs composés B7 et/ou B8 de façon analogue à une formulation courante d'agents phytoprotecteurs pris dans le groupe contenant des poudres pour poudrage, des concentrés émulsionnables, des solutions aqueuses, des émulsions, des solutions pulvérisables (tank-mix), des dispersions à base d'huile ou d'eau, des suspoémulsions, des agents pour poudrage, des stérilisants, des granulés à appliquer au sol ou par épandage, des granulés dispersables dans l'eau, des formulations ULV, des microcapsules et des cires.

8. Procédé pour la lutte contre des plantes indésirables caractérisé en ce qu'on applique sur celles-ci ou sur leur surface à cultiver une quantité efficace herbicide d'un agent selon une ou plusieurs des revendications 1 à 6.

9. Procédé selon la revendication 8, caractérisé en ce qu'il lutte sélectivement contre les plantes nuisibles dans la culture des plantes utiles.

10. Procédé selon la revendication 9, caractérisé en ce que la culture de plante utile est une culture appartement au groupe comportant le blé, l'orge, le seigle, le riz et le maïs.